# EUROPEAN PATENT SPECIFICATION

(11) **EP 3 009 226 B1**
(45) Date of publication and mention of the grant of the patent: **11.01.2017**
(21) Application number: 15186789.2
(22) Date of filing: 25.09.2015
(51) Int. Cl.: B23Q 1/52, B27M 1/00, B23Q 3/06

(54) **CLAMP DEVICE FOR CLAMPING A PLATE ON A WORK SURFACE OF A PROCESSING APPARATUS, PARTICULARLY FOR PROCESSING PLATES OF SMALL DIMENSIONS, IN PARTICULAR GLASS OR STONE PLATES AND WOOD PLATES**
SPANNVORRICHTUNG ZUM EINSPANNEN EINER PLATTE AUF EINER ARBEITSFLÄCHE EINER BEARBEITUNGSVORRICHTUNG, INSBESONDERE ZUR BEARBEITUNG VON PLATTEN MIT KLEINEN ABMASSEN, INSBESONDERE GLAS- ODER STEINPLATTEN UND HOLZPLATTEN.
DISPOSITIF DE SERRAGE POUR PLAQUE SUR UNE SURFACE DE TRAVAIL D'UN APPAREIL DE TRAITEMENT, EN PARTICULIER POUR PLAQUES DE TRAITEMENT DE PETITES DIMENSIONS, NOTAMMENT EN VERRE OU EN PIERRE ET EN BOIS

(30) Priority: 13.10.2014 IT TO20140824
(43) Date of publication of application: 20.04.2016
(73) Proprietor: Biesse S.p.A., 61122 Chiusa di Ginestreto (Pesaro Urbino) (IT)
(72) Inventor: BADIOLI, Filippo, 61122 Chiusa di Ginestreto (Pesaro Urbino) (IT); LINI, Gabriele, 61122 Chiusa di Ginestreto (Pesaro Urbino) (IT)
(74) Representative: Notaro, Giancarlo

(56) References cited:
- DE-U1- 20 108 768
- GB-A- 287 289

## Description

The present invention in general relates to apparatus for the machining of the edge of plates, for example glass plates or stone plates, and wood plates. In particular the invention relates to a clamp device for clamping a plate on a work surface of a machining apparatus.

According to the prior art, the plates to be machined are clamped on the work surface with the aid of suction cup clamping devices, or alternatively by means of clamping brackets. However, suction cup clamping devices cannot be used with plates of small dimensions, since due to the reduced support surface for the suction cup, the traction force generated by the application of vacuum is not sufficient to ensure a stationary and precise position of the work piece during machining. Mechanical clamping by means of brackets can also be adopted with pieces of small dimensions, but it has the disadvantage of making necessary to change the position of the brackets on the workpiece while the machining operation is being carried-out , which leaves on the work piece evident signs of the machining steps and causes a considerable loss of time.

Patent document DE 20108768U discloses a clamp device for clamping a plate on a work surface of a machining apparatus, according to the preamble of appended claim 1.

The purpose of the present invention is to overcome the drawbacks of the prior art, by providing a clamp device having an extremely simple and functional structure and adapted to enable also the clamping of plates of very small dimensions on the work surface of the apparatus, without requiring interruptions during the machining and/or operator interventions to enable the work head to pass throughout the whole perimeter of the plate to be machined.

In order to achieve this purpose, the present invention relates to a clamp device for clamping a plate on a work surface of a machining apparatus, said apparatus comprising a work head carrying a tool for machining the edge of the plate,
said device comprising:
- a base structure which can be secured to the work surface, and
- a lower clamp element and an upper clamp element for clamping said plate therebetween, defining a clamping vertical axis, and movable relative to each other in the direction of said clamping vertical axis, between an opened inoperative position and a closed operative position in which the plate is clamped,
- wherein said lower clamp element is carried by said base structure,
- wherein said upper clamp element is carried by a clamp element supporting unit which is rotatably mounted on said base structure around said vertical clamping axis,
- said clamp element supporting unit being adapted to detect the presence of the work head adjacent to it, and to make an oscillation movement around said vertical clamping axis as the work head proceeds around the plate for machining the edge of the plate, so as to avoid interference with the work head.

In a preferred embodiment said clamp element supporting unit is provided with an abutment member adapted to cooperate with a corresponding abutment member associated to said work head, in such a way that the work head is able to push the clamp element supporting unit away from interference with the work head, by causing the unit to rotate around said vertical clamping axis as the work head proceeds around the plate for working the edge of the plate.

According to an alternative solution, said clamp element supporting unit can be also provided with an actuator, such as an electronic motor or a fluid actuator, which can be controlled to drive said clamp element supporting unit depending upon either a signal from a proximity sensor adapted to detect the approaching movement of said work head or a command coming from an electronic control unit which controls the position of the work head.

Thanks to the aforesaid characteristics, the clamp device according to the invention is able to ensure precise mechanical clamping of the plate to be machined, even when the latter is relatively of small dimensions, without however hinder the progress of the work head along the perimeter of the plate.

In an examplary embodiment, the above mentioned clamp device is also characterized in that:
- the lower clamp element is carried by a vertical pin projecting from the base structure and rigidly connected thereto, the axis of said vertical pin defining said vertical clamping axis,
- the clamp element supporting unit includes:
- a lower portion mounted freely rotatable around said vertical pin, and
- an upper portion carried by said lower portion and vertically movable relative thereto,
- said upper clamp element being supported by said upper portion in a freely rotatable manner around said vertical clamping axis,
- said clamp device also includes an actuator device for controlling the vertical movement of the upper portion of the clamp element supporting unit in order to move the clamp element between said opened position and said closed clamping position.

Again referring to the aforementioned exemplary embodiment, said abutment member is a wheel mounted freely rotatable on the clamp element supporting unit around a vertical axis spaced from said vertical clamping axis, said wheel being arranged to cooperate with an abutment member associated to said working head also constituted by a wheel, or by a sector of a wheel, with a vertical axis.

In a variant of the invention, the upper portion of the clamp element supporting unit is rigidly connected to the base structure, while it is the work piece to be machined which is rotated around a vertical axis by means of an electric actuator (for example an electric motor) driven by the numerical (CNC) control unit of the apparatus. In this way the work piece can be machined by coordinating its rotation and the movement of the operating head along a straight axis.

It's important to underline that the device according to the invention is applicable both to the machining of glass plates or stone plates and to the machining of wood.

Further features and advantages of the present invention will become readily apparent from the following description with reference to the annexed drawings, given purely by way of non-limiting example, in which:
- figure 1 is a diagrammatic perspective view of an apparatus for machining of plates constituted for example of glass, stone or wood,
- figure 2 is a diagrammatic perspective view of a preferred embodiment of the clamp device according to the invention,
- figure 3 is a sectional view according to line III-III of figure 2,
- figure 4 is a sectional view according to line IV-IV of figure 3,
- figure 5 is a perspective view of a tool unit used in the apparatus of figure 1 and intended to carry out the machining of a plate of glass clamped by means of the device of figures 2-4,
- figure 6 is a side view in elevation showing the tool unit of figure 5 while it works a glass plate clamped by the device of figures 2-4, and
- figures 7A-7E are diagrams showing successive operating steps during the plate machining.

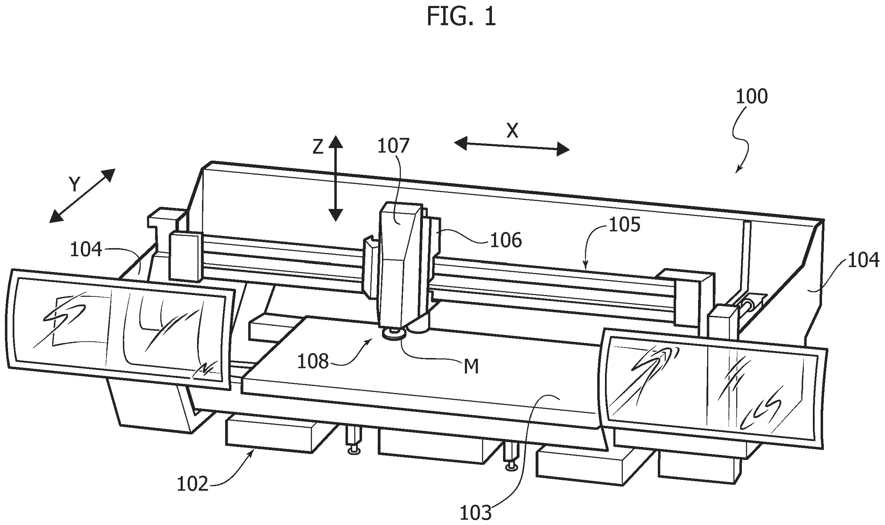

With reference to figure 1, purely by way of example it has been shown a numerically controlled machining apparatus 100, of a type which has been marketed since long by the Applicant themselves. The machining apparatus 100 comprises a fixed structure 102 with a work surface 103 on which a work head 108, carrying a tool M, is movable in three mutually perpendicular directions X, Y, Z. In particular the work head 108 is vertically movable together with a slide 107 slidably mounted along the direction Z on a carriage 106. The carriage 106 is movable along the direction X on a cross-member 105. The cross-member 105 has its end movably mounted in the direction Y on two sides 104 of the fixed structure of the apparatus.

The tool M carried by the work head 108 can be for example a grinding wheel with a vertical axis used for machining the edge of a glass plate supported in a fixed position above the work surface 103.

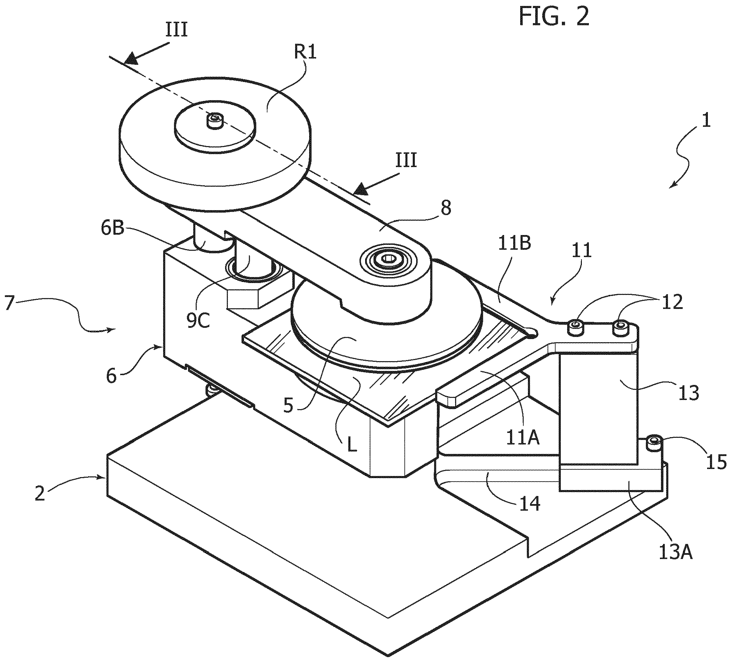

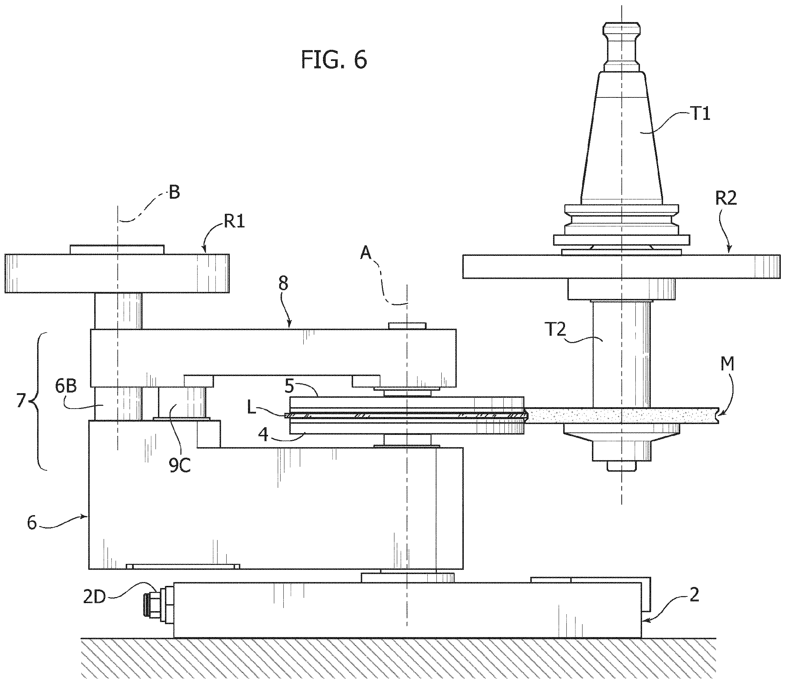

In the case of plates of relatively small dimensions (purely by way of example with dimensions lower than 150 mm.), the plate can be advantageously clamped on the work surface by means of the clamp device 1 shown in figures 2-7.

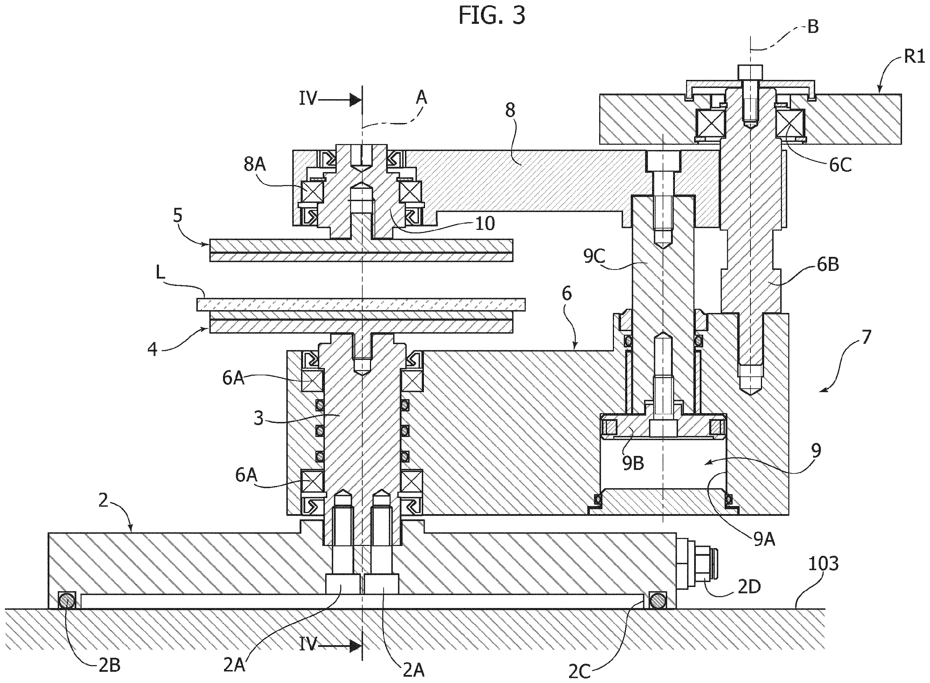

With reference to the illustrated embodiment, the device 1 comprises a base structure 2 in form of a plate provided with a suction cup clamping system (see figure 3), activated by application of vacuum, for clamping the plate 2 on the work surface. In the case of the illustrated example, the suction cup device comprises a recess 2C formed in the lower surface of the plate 2 which defines with the supporting surface 103 a closed chamber, hermetically isolated by means of a sealing ring 2B which is received in a annular cavity arranged concentrically on the outwardly of the recess 2C. The plate 2 is provided with connection fittings of the type indicated by 2D in figures 3, 4 and 6 for connection of a pipe which communicates the chamber 2C to the vacuum source (not illustrated in the drawings).

With reference again to figure 3, on the base structure 2 is secured by means of screws 2A the lower end of a support pin 3 which projects upwards from the plate 2 and has a vertical axis A. On the upper end of the pin 3 is rigidly connected a lower plate 4 intended to cooperate with an upper plate 5 in order to clamp a glass plate L to be machined. In the case of the illustrated example, the plate 4 has a lower threaded spigot which is screwed into a threaded hole formed in the top surface of the pin 3.

The lower portion 6 of a unit 7 carrying the upper plate 5 is rotatably mounted around the pin 3 by means of rolling bearings 6A. As shown also in figure 1, the structure of the lower portion 6 extends in a cantilevered way starting from the pin 3 and rigidly carries an upwardly extending vertical column 6B at an area which is spaced apart from the pin 3. On the column 6B there is slidably mounted an upper portion 8 of the unit 7. The upper portion 8 carries the upper plate 5 in the manner which will be described in detail hereinafter.

The upper portion 8 of the unit 7 is rotatable together with the lower portion 6 around the axis A of the pin 3, but is vertically movable relative to the lower portion 6. The vertical movement of the upper portion 8 of the unit 7 relative to the lower portion 6 is controlled by a fluid actuator (in the case of the example illustrated, a pneumatic actuator) generally indicated by the reference number 9. The actuator 9 has a cylindrical cavity 9A directly formed in the structure of the lower portion 6 of the unit 7, and a plunger 9B slidably mounted within the cylindrical cavity 9 and rigidly connected to a rod 9C. The rod 9C is slidably mounted in the structure of the lower portion 6 and protrudes upwardly from it in order to rigidly connect its upper end to the upper portion 8 of the unit 7.

The upper portion 8 of the unit 7 is provided in the form of an arm which extends in a cantilevered way starting from the column 6B in the direction of the axis A. At the end of the structure of the portion 8 opposite to the slidably mounted end above the column 6B, the portion 8 rotatably supports, around axis A, by means of a rolling bearing 8A, a vertical pin 10 to whose lower end the upper plate 5 is rigidly connected. In the case of the illustrated example, the plate 5 has a threaded upper spigot which is screwed into a threaded hole formed in the end surface of the pin 10.

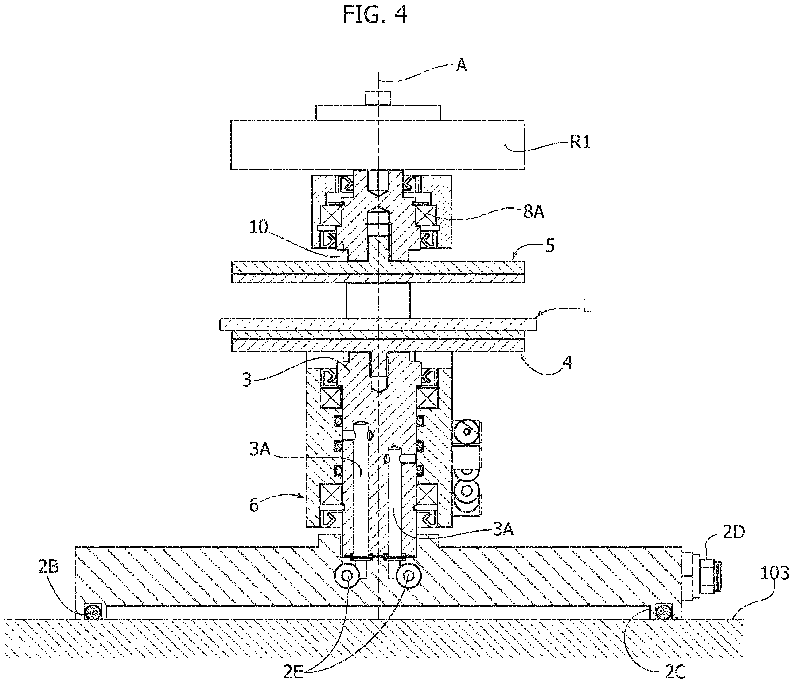

As visible in figure 4, into the pin 3 channels 3A are formed for the passage of the fluid entering and exiting from the fluid actuator 9. These channels are in communication with additional channels 2E formed in the base structure 2 of the plate and which open out on a surface of the base plate 2 where connection elements are provided of the type indicated with 2D in figures 3, 4 and 6 for connection with fluid supplying pipes. In figure 4 connection elements 3B are also visible for connection of the channels 3A with inlet fittings and outlet fittings associated to the fluid actuator 9A (not visible in the drawings). The fluid actuator can thus be fed in order to control the displacement of the upper portion 8 of the unit 7 with respect to the lower portion 6 between a raised position, in which the two plates 4, 5 are in an opened condition, and a lowered position, in which the two plates 4, 5 are in a closed position for clamping the plate L.

Again with reference to figures 2-4, the column 6B presents an upper end projecting above the upper portion 8 of the unit 7 on which there is freely rotatably mounted, by interposition of a rolling bearing 6C, a wheel R1 acting as abutment member in order to cause the rotation movement of the unit 7 around the axis A which enables the work head of the apparatus to carry out without any hindrance the machining of the edge of the plate along the entire perimeter of the plate, according to what will be described in more detail in the following.

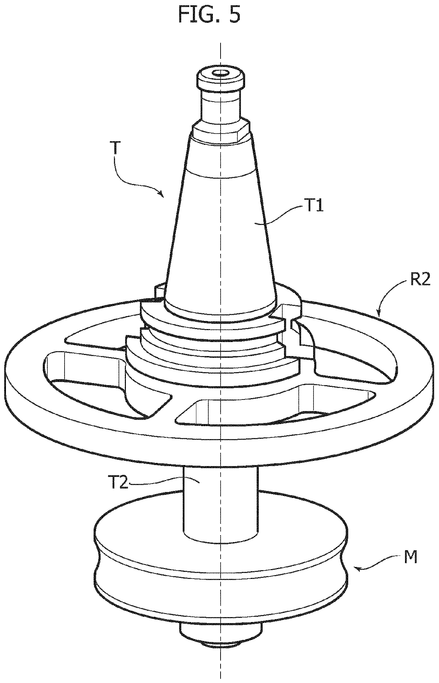

The wheel R1 is intended to cooperate with a wheel R2 rotatably mounted above the cylindrical body of a tool assembly T which is attached to the machining head of the apparatus. As visible in figure 5, the tool assembly T is of the known type including a conical portion T1 for the rapid attachment of the tool unit to the spindle of the working head. The body of the tool unit T carries a tool in the form of an abrasive grinding wheel M. The wheel R2 is rotatably mounted by a rolling bearing or a bushing (not illustrated) on the shaft of the tool M so as to be able to not follow the rotation of the grinding wheel M which is impressed to it from the spindle of the working head during machining.

Finally, with reference to figure 2, the device according to the invention is also provided with a reference member 11 for precisely locating in a predetermined position with respect to the base structure 2. In the case of the illustrated example, the reference member is constituted by a square element, comprising two arms 11 A intended to be in contact with two adjacent sides of the plate L. Again in the case of the illustrated example, the square element 11 is secured by means of screws 12 on the upper end of a support body 13 whose lower end comprises a base 13A slidably mounted on a linear guide 14 and clamped in a desired position above the guide 14 by tightening of a screw 15.

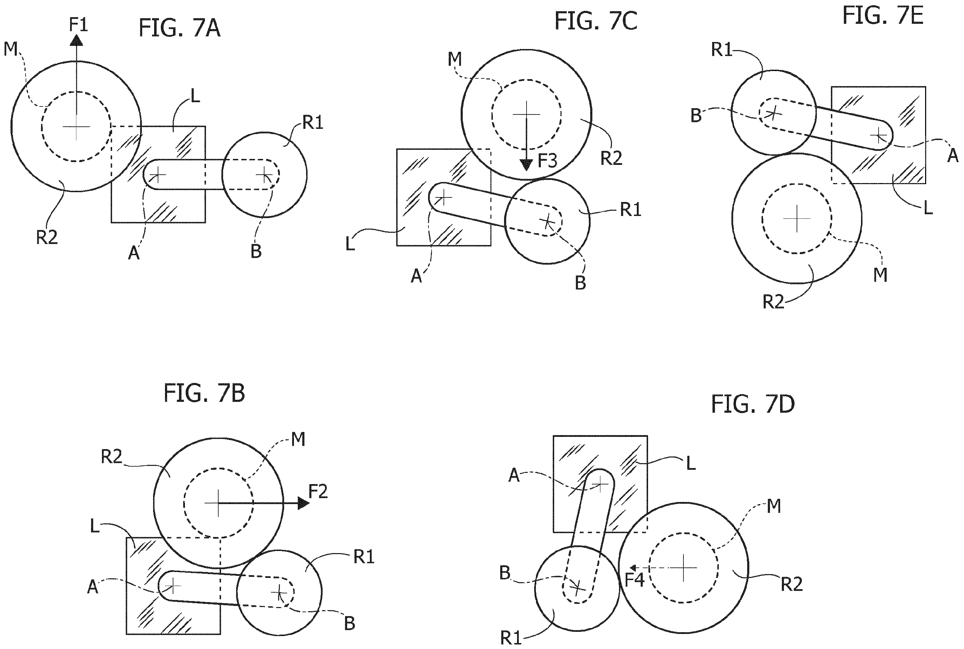

The operation of the above described clamp device will be now illustrated with the aid also of figures 7A-7E.

Initially, the base structure 2 of the device 1 is supported and clamped above the surface 103 of the apparatus by applying vacuum to the chamber 2C. The plates 4, 5 are arranged in the opened condition, to enable a plate L to be machined to be positioned above the lower plate 4. Once the plate L has been placed above the lower plate 4 it is brought in contact with the arms 11A of the reference member 11 to ensure that the plate is in a rigorously predetermined precise position, known to the electronic control of the machining apparatus. Once the plate L has been placed in position, it is clamped in that position by activating the fluid cylinder 9 so as to determine the lowering of the upper portion of the unit 7 and the clamping of the plate L between the two plates 4, 5. When the clamping is completed, the reference member 11 is removed, after loosening the screw 15. Of course it is possible to provide a reference member which is displaceable in an automated manner. Furthermore, reference retractable members may be provided, which are displaceable on the work surface between an operative position and a retracted position in which they are hidden below this surface.

Once the plate L has been clamped between the plates 4, 5 and the reference member 11 has been removed, the machining apparatus 100 can start its working cycle by carrying the work head 108 adjacent the plate L in such a way that the grinding wheel L carries out the machining of the edges of the plate L, while continuously proceeding along the entire perimeter of the plate.

With reference for example to figure 7A, in this figure the grinding wheel M is schematically illustrated while it has completed the machining of a first side of the plate L by proceeding in a direction F1. The figure 7B shows the grinding wheel M which has completed the machining of a second side, by proceeding in a second direction F2. As can be seen, the machining of the first two sides has been performed with the tool unit never coming into interference with the clamp device.

Figure 7C instead shows how, even before starting to machine a third side of the plate, the wheel R2 associated to the grinding wheel M comes into contact with the wheel R1 associated to the clamp device. The next advancing movement of the grinding wheel M in the direction F3 makes the wheel R2 to push the wheel R1 away from it, resulting in a rotation of the whole unit 7 around the vertical axis A. Figure 7D shows the grinding wheel M that has completed the machining of the third side of the plate thanks to the fact that the wheel R2 has pushed the wheel R1 away from the interference with the tool unit. Figure 7E shows the grinding M when it has reached the end of the machining of the fourth side of the plate L. In this condition, the unit 7 of the clamp device has performed a substantially 180° rotation from its starting position.

The above described device could be used with plates having even smaller dimensions compared with those illustrated in figures 7A-7E.

Instead of the wheel R2 it would be possible to adopt a wheel sector which is oriented by means of a controlled axis of the apparatus, in order to maintain the contact with the driven gear R1. Furthermore the wheel, or the wheel sector R2, could be directly attached to the head 108 rather than to the tool.

As already indicated above, it would be possible to envisage a variant of the above described device in which, in place of the abutment member R1 (and of the abutment member R2 cooperating therewith) said clamp element supporting unit is provided with an actuator (such as an electric motor or a fluid actuator) adapted to control the rotation of the clamp element supporting unit 7 around the axis A, so as to maintain the unit 7 out from the interference with the work head 108 while it proceeds along the perimeter of the plate L. The actuator could be controlled depending on the signal of a proximity sensor (such as an ultra sound transducer) for detecting the approach of the working head, or could be controlled by the numerical control of the apparatus, which in every instant knows the position of the work head 108.

Naturally, while the principle of the invention remains the same, the details of construction and the embodiments may widely vary with respect to what has been described and shown purely by way of example, without departing from the scope of the invention.

In a variant, the unit 7 is integral with the base 2, while it is the work piece which is rotated around the vertical axis by means of an electric actuator (for example an electric motor) controlled by the numerical control of the apparatus. In this way the work piece could be machined by coordinating its rotation and the movement of the operating head along a straight axis.

## Claims

1. Clamp device (1) for clamping a plate (L) on a work surface (103) of a machining apparatus (100), said apparatus comprising a work head (108) carrying a tool (M) for machining the edge of the plate (L), said device comprising:
- a base structure (2) which can be secured to the work surface (103), and
- a lower clamp element (4) and an upper clamp element (5) for clamping said plate (L) therebetween, defining a clamping vertical axis (A), and movable relative to each other in the direction of said clamping vertical axis (A), between an opened inoperative position and a closed operative position in which the plate (L) is clamped,
- wherein said lower clamp element (4) is carried by said base structure (2),
- wherein said upper clamp element (5) is carried by a clamp element supporting unit (7) which is rotatably mounted on said base structure (2) around said vertical clamping axis, and being **characterized in that**
- said clamp element supporting unit (7) is adapted to detect the presence of the work head (108) adjacent to it, and to make an oscillation movement around said vertical clamping axis (A) as the work head (108) proceeds around the plate (L) for machining the edge of the plate, so as to avoid interference with the work head (108).

2. Clamp device according to claim 1, **characterized in that** said clamp element supporting unit (7) is provided with an abutment member (R1) adapted to cooperate with a corresponding abutment member (R2) associated to said work head (108), in such a way that the work head (108) is able to push the clamp element supporting unit (7) away from interference with the work head, by causing the unit to rotate around said vertical clamping axis (A) as the work head proceeds around the plate for working the edge of the plate.

3. Clamp device according to claim 1, **characterized in that** said clamp element supporting unit (7) is provided with an actuator, such as an electric motor or a fluid actuator, which can be controlled to drive said clamp element supporting unit (7) depending upon either a signal from a proximity sensor adapted to detect the approaching movement of said work head (108) or a command coming from an electronic control unit which controls the position of the work head (108).

4. Clamp device according to claim 1, **characterized in that**:
- the lower clamp element (4) is carried by a vertical pin (3) projecting from the base structure (2) and rigidly connected thereto, the axis of said vertical pin (3) defining said vertical clamping axis (A),
- the clamp element supporting unit (7) includes:
- a lower portion (6) mounted freely rotatable around said vertical pin (3), and
- an upper portion (8) carried by said lower portion (6) and vertically movable relative thereto,
- said upper clamp element (5) being supported by said upper portion (8) in a freely rotatable manner around said vertical clamping axis (A),
- said clamp device also includes an actuator device (9) for controlling the vertical movement of the upper portion (8) of the clamp element supporting unit (7) in order to move the clamp elements (4, 5) between said opened position and said closed clamping position.

5. Clamp device according to claim 4, **characterized in that** said actuator device is a fluid actuator (9).

6. Clamp device according to claim 4, **characterized in that** said vertical pin (3) has internal channels (3) for passage of a fluid for activation of said fluid actuator (9).

7. Clamp device according to claim 2, **characterized in that** the abutment member arranged on the clamp element supporting unit (7) is constituted by a wheel (R1) mounted freely rotatable on the clamp element supporting unit (7) around a vertical axis (B) spaced from said vertical clamping axis (A), the abutment member associated with said work head (108) being also constituted by a wheel (R2), or by a sector of a wheel.

8. Clamp device according to claim 1, **characterized in that** said base structure (2) there are arranged one or more locating members (11) for positioning the plate (L) to be machined above the base structure (2) in a precise predetermined position.

9. Clamp device according to claim 8, **characterized in that** said one or more reference members (11) comprise a square element having two arms (11A) adapted to come into contact with two adjacent sides of the plate to be machined (L).

10. Clamp device according to claim 8, **characterized in that** said one or more reference members (11) are arranged so as to be removable, either manually or automatically, or are retractable reference members, positioned on the work surface and movable between an operative position and a retracted inoperative position.

## Patentansprüche

1. Spanneinrichtung (1) zum Einspannen einer Platte (L) auf einer Arbeitsfläche (103) einer Bearbeitungsvorrichtung (100), wobei die Vorrichtung einen Werkzeugkopf (108) aufweist, der ein Werkzeug (M) zur Bearbeitung des Rands der Platte (L) trägt,
wobei die Einrichtung umfasst:
- einen Grundaufbau (2), der auf der Arbeitsfläche (103) befestigt werden kann, und
- ein unteres Spannelement (4) und ein oberes Spannelement (5) zum Einspannen der Platte (L) dazwischen, die eine vertikale Spannachse (A) festlegen und relativ zueinander in der Richtung der vertikalen Spannachse (A) zwischen einer geöffneten Ruheposition und einer geschlossenen Betriebsposition, in der die Platte (L) eingespannt ist, bewegbar sind,
- wobei das untere Spannelement (4) von dem Grundaufbau (2) getragen wird,
- wobei das obere Spannelement (5) von einer Spannelement-Trägereinheit (7) getragen wird, die auf dem Grundaufbau (2) drehbar um die vertikale Spannachse montiert ist,
**dadurch gekennzeichnet, dass**
- die Spannelement-Trägereinheit (7) ausgebildet ist, die Anwesenheit des Werkzeugkopfes (108) in ihrer Nachbarschaft zu erkennen und eine Schwingungsbewegung um die vertikale Spannachse (A) zur Vermeidung einer Behinderung des Werkzeugkopfes (108) auszuführen, wenn der Werkzeugkopf (108) um die Platte (L) zur Bearbeitung des Rands der Platte herumfährt.

2. Spanneinrichtung nach Anspruch 1, **dadurch gekennzeichnet, dass** die Spannelement-Trägereinheit (7) mit einem Anschlagselement (R1) versehen ist, das ausgebildet ist, mit einem entsprechenden Anschlagselement (R2), das mit dem Werkzeugkopf (108) verbunden ist, derart zu kooperieren, dass der Werkzeugkopf (108) in der Lage ist, die Spannelement-Trägereinheit (7) aus einem Bereich der Behinderung des Werkzeugkopfs zu schieben, indem die Einheit veranlasst wird, sich um die vertikale Spannachse (A) zu drehen, wenn der Werkzeugkopf zur Bearbeitung des Rands der Platte um die Platte herum fährt.

3. Spanneinrichtung nach Anspruch 1, **dadurch gekennzeichnet, dass** die Spannelement-Trägereinheit (7) mit einem Aktuator versehen ist, etwa einem Elektromotor oder einem Fluid-Aktuator, der steuerbar ist, um die Spannelement-Trägereinheit (7) abhängig von einem Signal aus einem Näherungssensor, der zur Bewegungserfassung bei Annäherung des Werkzeugkopfes (108) ausgebildet ist, oder einem Befehl, der aus einer elektronischen Steuerungseinheit stammt, die die Position des Werkzeugkopfes (108) steuert, anzusteuern.

4. Spanneinrichtung nach Anspruch 1, **dadurch gekennzeichnet, dass**:
- das die untere Spannelement (4) von einem vertikalen Stift (3) getragen wird, der aus dem Grundaufbau (2) hervorsteht und starr mit diesem verbunden ist, wobei die Achse des vertikalen Stifts (3) die vertikale Spannachse (A) festlegt,
- die Spannelement-Trägereinheit (7) aufweist:
- einen unteren Bereich (6), der frei drehbar um den vertikalen Stift (3) montiert ist, und
- einen oberen Bereich (8), der von dem unteren Bereich (6) getragen wird und relativ dazu vertikal bewegbar ist,
- wobei das untere Spannelement (5) von dem oberen Bereich (8) frei drehbar um die vertikale Spannachse (8) gehalten wird,
- die Spanneinrichtung ferner eine Aktuator-Einrichtung (9) zur Steuerung der vertikalen Bewegung des oberen Bereichs (8) der Spannelement-Trägereinheit (7) aufweist, um die Spannelemente (4, 5) von der geöffneten Position in die geschlossene Spannposition und umgekehrt zu bewegen.

5. Spanneinrichtung nach Anspruch 4, **dadurch gekennzeichnet, dass** die Aktuator-Einrichtung ein Fluid-Aktuator (9) ist.

6. Spanneinrichtung nach Anspruch 4, **dadurch gekennzeichnet, dass** der vertikale Stift (3) Innenkanäle (3) für den Durchgang eines Fluids zur Aktivierung des Fluid-Aktuators (9) aufweist.

7. Spanneinrichtung nach Anspruch 2, **dadurch gekennzeichnet, dass** das Anschlagselement, das auf der Spannelement-Trägereinheit (7) angeordnet ist, aus einem Rad (R1) aufgebaut ist, das auf der Spannelement-Trägereinheit (7) frei drehbar um eine vertikale Achse (B) montiert ist, die von der vertikalen Spannachse (A) beabstandet ist, wobei das Anschlagselement, das mit dem Werkzeugkopf (108) verbunden ist, auch aus einem Rad (R2) oder aus einem Abschnitt eines Rads aufgebaut ist.

8. Spanneinrichtung nach Anspruch 1, **dadurch gekennzeichnet, dass** in dem Grundaufbau (2) ein oder mehrere Referenzierelemente (11) zur Positionierung der zu bearbeitenden Platte (L) über dem Grundaufbau (2) in einer genau vorbestimmten Position angeordnet sind.

9. Spanneinrichtung nach Anspruch 8, **dadurch gekennzeichnet, dass** das eine oder die mehreren Referenzierelemente (11) ein quadratisches Element mit zwei Auslegern (11A) umfassen, die ausgebildet sind, mit zwei benachbarten Seiten der zu bearbeitenden Platte (L) in Kontakt zu treten.

10. Spanneinrichtung nach Anspruch 8, **dadurch gekennzeichnet, dass** das eine oder die mehreren Referenzierelemente (11) so angeordnet sind, dass sie manuell oder automatisch bewegbar sind, oder dass sie zurückziehbare Referenzierelemente sind, die auf der Arbeitsfläche positioniert und zwischen einer Betriebsposition und einer zurückgezogenen Ruheposition bewegbar sind.

## Revendications

1. Dispositif de serrage (1) pour serrer une plaque (L) sur une surface de travail (103) d'un appareil d'usinage (100), ledit appareil comprenant une tête de travail (108) portant un outil (M) pour l'usinage du bord de la plaque (L),
ledit dispositif comprenant :
- une structure de base (2) qui peut être fixée à la surface de travail (103), et
- un élément de serrage inférieur (4) et un élément de serrage supérieur (5) pour serrer ladite plaque (L) entre eux, définissant un axe vertical de serrage (A), et mobiles l'un par rapport à l'autre dans la direction dudit axe vertical de serrage (A), entre une position de repos ouverte et une position de fonctionnement fermée où la plaque (L) est serrée,
- dans lequel ledit élément de serrage inférieur (4) est porté par ladite structure de base (2),
- dans lequel ledit élément de serrage supérieur (5) est porté par une unité de support d'élément de serrage (7) qui est montée en rotation sur ladite structure de base (2) autour dudit axe de serrage vertical, et étant **caractérisé en ce que**
- ladite unité de support d'élément de serrage (7) est adaptée pour détecter la présence de la tête de travail (108) qui lui est adjacente, et pour créer un mouvement d'oscillation autour dudit axe de serrage vertical (A) à mesure que la tête de travail (108) passe autour de la plaque (L) pour l'usinage du bord de la plaque, de manière à éviter une interférence avec la tête de travail (108).

2. Dispositif de serrage selon la revendication 1, **caractérisé en ce que** ladite unité de support d'élément de serrage (7) est munie d'un élément de butée (R1) adapté pour coopérer avec un élément de butée correspondant (R2) associé à ladite tête de travail (108), de manière à ce que la tête de travail (108) soit capable de pousser l'unité de support d'élément de serrage (7) loin de l'interférence avec la tête de travail, en amenant l'unité à tourner autour dudit axe de serrage vertical (A) à mesure que la tête de travail passe autour de la plaque pour effectuer un travail sur le bord de la plaque.

3. Dispositif de serrage selon la revendication 1, **caractérisé en ce que** ladite unité de support d'élément de serrage (7) est munie d'un actionneur, tel qu'un moteur électrique ou un actionneur à fluide, qui peut être commandé pour entraîner ladite unité de support d'élément de serrage (7) soit en fonction d'un signal provenant d'un capteur de proximité adapté pour détecter le mouvement de rapprochement de ladite tête de travail (108) ou d'une instruction provenant d'une unité de commande électronique qui commande la position de la tête de travail (108).

4. Dispositif de serrage selon la revendication 1, **caractérisé en ce que** :
- l'élément de serrage inférieur (4) est porté par une broche verticale (3) faisant saillie à partir de la structure de base (2) et relié de manière rigide à celle-ci, l'axe de ladite broche verticale (3) définissant ledit axe de serrage vertical (A),
- l'unité de support d'élément de serrage (7) comporte :
- une partie inférieure (6) montée librement en rotation autour de ladite broche verticale (3), et
- une partie supérieure (8) portée par ladite partie inférieure (6) et étant verticalement mobile par rapport à celle-ci,
- ledit élément de serrage supérieur (5) étant supporté par ladite partie supérieure (8) de manière à pouvoir tourner librement autour dudit axe de serrage vertical (A),
- ledit dispositif de serrage comporte également un dispositif actionneur (9) pour commander le mouvement vertical de la partie supérieure (8) de l'unité de support d'élément de serrage (7) afin de déplacer les éléments de serrage (4, 5) entre ladite position ouverte et ladite position de serrage fermée.

5. Dispositif de serrage selon la revendication 4, **caractérisé en ce que** ledit dispositif actionneur est un actionneur à fluide (9).

6. Dispositif de serrage selon la revendication 4, **caractérisé en ce que** ladite broche verticale (3) a des canaux internes (3) pour le passage d'un fluide pour l'activation dudit actionneur à fluide (9).

7. Dispositif de serrage selon la revendication 2, **caractérisé en ce que** l'élément de butée agencé sur l'unité de support d'élément de serrage (7) est constitué d'une roue (R1) montée librement en rotation sur l'unité de support d'élément de serrage (7) autour d'un axe vertical (B) espacé dudit axe de serrage vertical (A), l'élément de butée associé à ladite tête de travail (108) étant également constitué d'une roue (R2), ou d'un secteur d'une roue.

8. Dispositif de serrage selon la revendication 1, **caractérisé en ce que** dans ladite structure de base (2) un ou plusieurs élément(s) de localisation (11) est/sont agencé(s) pour positionner la plaque (L) à usiner au-dessus de la structure de base (2) dans une position prédéterminée précise.

9. Dispositif de serrage selon la revendication 8, **caractérisé en ce que** ledit ou lesdits plusieurs élément(s) de référence (11) comprend/comprennent un élément carré ayant deux bras (11 A) adaptés pour entrer en contact avec deux côtés adjacents de la plaque à usiner (L).

10. Dispositif de serrage selon la revendication 8, **caractérisé en ce que** ledit ou lesdits plusieurs élément(s) de référence (11) est/sont agencé(s) de manière à être amovible(s), soit manuellement ou automatiquement, ou est/sont des éléments de référence rétractables, positionnés sur la surface de travail et mobiles entre une position de fonctionnement et une position de repos rétractée.
